# EUROPÄISCHE PATENTSCHRIFT

(11) **EP 2 239 808 B1**
(45) Veröffentlichungstag und Bekanntmachung des Hinweises auf die Patenterteilung: **25.12.2013**
(21) Anmeldenummer: 09005244.0
(22) Anmeldetag: 09.04.2009
(51) Int. Cl.: H01M 8/04, H01M 8/10

(54) **Selbstreinigung eines Brennstoffzellensystems mit Flüssigkeitskreislauf**
Self-cleaning of a fuel cell system with fluid circuit
Nettoyage automatique d'un système de piles à combustible doté d'un circuit de liquide

(43) Veröffentlichungstag der Anmeldung: 13.10.2010
(73) Patentinhaber: SFC Energy AG, 85649 Brunnthal (DE)
(72) Erfinder: Loch, Jörg, 83624 Otterfing (DE)
(74) Vertreter: Grünecker, Kinkeldey, Stockmair & Schwanhäusser

(56) Entgegenhaltungen:
- DE-A1-102006 048 825
- US-A1- 2005 003 254
- US-A1- 2005 074 656
- US-A1- 2005 255 358
- US-A1- 2006 204 803

## Beschreibung

### Gebiet der Erfindung

Die Erfindung betrifft ein Verfahren zum Abreichern von Verunreinigungen in einem Flüssigkeitskreislaufs eines Brennstoffzellensystems. Weiterhin betrifft die Erfindung ein Brennstoffzellensystem, welches zur Durchführung des erfindungsgemäßen Verfahrens ausgebildet ist.

### Stand der Technik

Brennstoffzellen, insbesondere Direktmethanolbrennstoffzellen (DMBZ), sind wegen der speziellen katalytischen Prozesse hoch anfällig für Verunreinigungen in den Betriebsmedien. Dies betrifft insbesondere die Verunreinigung durch Ionen der Metalle Eisen, Kobalt und Nickel, welche die chemischen Reaktionen an den Katalysatoren Platin bzw. Platin/Ruthenium empfindlich stören oder blockieren können. Nur sehr wenige Stoffe werden von der Brennstoffzelle toleriert, darunter hochreines Wasser, hochreiner Brennstoff, hochreine Luft. Deren Bereitstellung ist für praxistaugliche und kostengünstige Produkte jedoch nur eingeschränkt möglich. So enthält handelsübliches Methanol z.B. erhebliche Konzentrationen an Verunreinigungen, welche im Laufe des Betriebs eines Brennstoffzellensystems akkumuliert werden (z.B. Ethanol, Aceton, höherwertige Kohlenwasserstoffe)

Selbst wenn diesbezüglich akzeptabel niedrige Verunreinigungen erreicht werden könnten, bleibt das Problem der Kontamination durch Auswaschungen, denn auch die Werkstoffe der im System verwendeten Komponenten geben über die Zeit Stoffe in den Flüssigkeitskreislauf ab. So sind z.B. bestimmte Additive in gängigen Kunststoffen häufig anzutreffende Verunreinigungen, welche langsam, aber stetig aus dem Werkstoff nachweisbar herausgelöst werden. Beispiele sind Weichmacher (z.B. Phthalate), Stabilisatoren (z.B. Irganox) und ionische Verunreinigungen (z.B. Eisen, Natrium, etc.).

Der Wasserhaushalt eines Brennstoffzellen-Systems, wird durch Entfernung von Wasserdampf aus dem Abgasstrom geregelt. Überschüssiges Wasser verlässt das System als Dampf mit dem Abgasstrom. Somit wird die Flüssigkeitsmenge im Kreislauf konstant gehalten. Dabei wird der Wasserhaushalt eines DMBZ-Systems durch Kondensation von Wasserdampf über einen Wärmetauscher in Kombination mit einem Lüfter gegen Umgebungstemperatur geregelt. Der Wärmetauscher kühlt mit der durchströmenden Umgebungsluft das Abgas gerade soweit herunter, dass nur soviel Wasser als Dampf das System verlässt, um die angestrebte Menge und Konzentration der Methanollösung aufrecht zu erhalten. Dies wird in den Dokumenten EP 1383190 B1 und EP 1383191 B1 beschrieben.

Die oben genannten Verunreinigungen reduzieren die Lebensdauer von Brennstoffzellenstacks und mancher anderer Komponenten eines Brennstoffzellen-Systems erheblich. Da das überschüssige Produktwasser das System lediglich als Gasphase verlässt, bleiben nichtflüchtige Verunreinigungen im System zurück. Anders ausgedrückt: Der Flüssigkeitskreislauf eines Brennstoffzellen-Systems hat nur Zuflüsse, aber keinen Abfluss, weshalb sich nichtflüchtige Verunreinigungen und auch organische Verunreinigungen akkumulieren. Die erreichbare Lebensdauer hängt dadurch von der Reinheit der verwendeten Materialien und des Brennstoffs ab. Eine Verbesserung der Reinheit bringt jedoch erhebliche Mehrkosten mit sich und ist in der Praxis aus Kostengründen kaum machbar.

Nach US 2005/0074656 A1 werden Verunreinigungen im flüssigen Brennstoff wie beispielsweise Methanol durch einen Filter in einem Behälter entfernt, wobei dieser Behälter von der Brennstoffzelle abgeführten Brennstoff aufnimmt und Brennstoff mit einer vorbestimmten Konzentration wieder der Brennstoffzelle zuführt.

US 2005/003254 A1 offenbart, dass eine Wassermenge in einem DMBZ-System überwacht und eine Entlüftung derart gesteuert wird, dass überschüssiges Wasser entfernt wird, wenn zuviel Wasser rezirkuliert wird.

Beschreibung der Erfindung

Angesichts der Nachteile des Stands der Technik, liegt der Erfindung die Aufgabe zugrunde, ein Brennstoffzellensystem und ein Verfahren zum Betreiben desselben bereitzustellen, wobei die Menge von Verunreinigungen im Flüssigkeitskreislauf des Brennstoffzellen-Systems reduziert werden kann.

Die genannte Aufgabe wird gelöst durch ein erfindungsgemäßes Verfahren zum Abreichern von Verunreinigungen in einem Flüssigkeitskreislaufs eines Brennstoffzellensystems, wobei das Verfahren die Schritte gemäß Anspruch 1 umfasst.

Auf diese Weise wird Flüssigkeit mit Verunreinigungen aus dem Flüssigkeitskreislauf des Brennstoffzellensystem abgeführt, so dass insbesondere ein Teil der Verunreinigungen aus dem System entfernt wird. Weiterhin wird die Flüssigkeitsmenge im Flüssigkeitskreislauf erhöht, wodurch die abgeführte Flüssigkeitsmenge ganz oder teilweise ausgeglichen wird.

Das erfindungsgemäße Verfahren kann dahingehend weitergebildet werden, dass Schritt (a) vor Schritt (b) erfolgt und das Erhöhen der Flüssigkeitsmenge im Flüssigkeitskreislauf im Schritt (b) so lange erfolgt, bis die im Schritt (a) abgeführte Flüssigkeitsmenge wieder zugeführt ist. Dies hat den Vorteil, dass in dieser Weiterbildung in Schritt (a) (beispielsweise einmalig) eine gewisse Menge an Flüssigkeit aus dem Flüssigkeitskreislauf entfernt und aufgefangen werden kann, um dann entsprechend entsorgt zu werden.

Das erfindungsgemäße Verfahren kann dahingehend weitergebildet werden, dass Schritt (b) vor Schritt (a) erfolgt und das Reduzieren der Flüssigkeitsmenge im Schritt (a) so lange erfolgt, bis die im Schritt (b) erhöhte Flüssigkeitsmenge wieder abgeführt ist. Dies ist eine Alternative zur vorherigen Weiterbildung.

Das erfindungsgemäße Verfahren kann dahingehend weitergebildet werden, dass die Schritte (a) und (b) gleichzeitig oder teilweise gleichzeitig ausgeführt werden. Dadurch ist es möglich, den Schritt (a) während des Betriebs beständig durchzuführen und den Schritt (b) ebenfalls beständig oder bei Bedarf nur zeitweilig durchzuführen. Mittels eines Überlaufs im Flüssigkeitskreislauf kann auf diese Weise eine während des Betriebs andauernde, beispielsweise konstante Abfuhr von Verunreinigungen und somit eine Selbstreinigung des Systems erfolgen.

Das erfindungsgemäße Verfahren und die zuvor genannten Weiterbildungen können dahingehend weitergebildet werden, dass der Flüssigkeitskreislauf einen Anodenkreislauf umfasst und das Reduzieren der Flüssigkeitsmenge im Flüssigkeitskreislauf ein Abführen eines Teils der Flüssigkeit aus dem Anodenkreislauf umfasst. Auf diese Weise kann auf einfache Weise verunreinigte Flüssigkeit aus dem Brennstoffzellensystem entnommen werden.

Das erfindungsgemäße Verfahren umfasst den Schritt, dass die Wassermenge im Flüssigkeitskreislauf des Brennstoffzellensystems durch Abführen von Wasserdampf aus dem Brennstoffzellensystem geregelt wird, wobei das Erhöhen der Flüssigkeitsmenge im Flüssigkeitskreislauf ein Reduzieren der Wasserdampfabführung umfasst. Auf diese Weise kann die durch Schritt (a) dem System entzogene Wassermenge einfach ausgeglichen werden, indem z.B. eine Kondensationswärmetauscher so geregelt wird, dass mehr von der Kathode kommendes Produktwasser auskondensiert und dem Flüssigkeitskreislauf zugeführt wird.

Das erfindungsgemäße Verfahren und die zuvor genannten Weiterbildungen können dahingehend weitergebildet werden, dass das Erhöhen der Flüssigkeitsmenge im Flüssigkeitskreislauf ein Zuführen von Wasser in den Flüssigkeitskreislauf umfasst.

Das erfindungsgemäße Verfahren und die zuvor genannten Weiterbildungen können dahingehend weitergebildet werden, dass das Brennstoffzellensystem ein Direktmethanolbrennstoffzellensystem ist und die Flüssigkeit eine Mischung aus Wasser und Methanol umfasst. Dabei wird das erfindungsgemäße Verfahren auf ein gebräuchliches Brennstoffzellensystem (DMBZ-System) angewendet.

Das erfindungsgemäße Verfahren oder die zuvor genannten Weiterbildungen in Kombination mit einem Erhöhen der Flüssigkeitsmenge im Flüssigkeitskreislauf durch Zuführen von Wasser in den Flüssigkeitskreislauf können dahingehend weitergebildet werden, dass der Schritt (b) weiterhin ein Zuführen von Methanol umfasst, so dass das Mischungsverhältnis von Wasser und Methanol im Anodenkreislauf vor und nach Durchführung von Schritt (b) gleich ist bzw. beim gleichzeitigen Durchführen der Schritte (a) und (b) derart, dass das Mischungsverhältnis von Wasser und Methanol im Anodenkreislauf im Wesentlichen konstant bleibt, so dass die chemischen Prozesse zur Strom- bzw. Spannungserzeugung unverändert weiterlaufen.

Das erfindungsgemäße Verfahren und die zuvor genannten Weiterbildungen können dahingehend weitergebildet werden, dass die Schritte (a) und (b) oder einer der Schritte (a) und (b) mehrfach, insbesondere periodisch wiederholt, ausgeführt werden/wird. Auf diese Weise kann ein Abführen von Verunreinigungen bei Bedarf oder bei Gelegenheit wiederholt werden.

Das erfindungsgemäße Verfahren und die zuvor genannten Weiterbildungen können dahingehend weitergebildet werden, dass die Schritte (a) und (b) derart aufeinander abgestimmt sind, dass die Flüssigkeitsmenge im Flüssigkeitskreislauf bei Durchführung des Verfahrens im Wesentlichen gleich ist. Dies hat den Vorteil, dass es nicht zu einer Störung des Brennstoffzellensystems durch einen zu geringen Flüssigkeitspegel kommen kann.

Die oben genannte Aufgabe wird weiterhin gelöst durch ein erfindungsgemäßes Brennstoffzellensystem, welches zur Durchführung des erfindungsgemäßen Verfahrens oder dessen Weiterbildungen ausgebildet ist, die Merkmale von Anspruch 11 umfassend. Zu den Vorteilen des erfindungsgemäßen Brennstoffzellensystems wird auf die entsprechende Darstellung im Zusammenhang mit dem erfindungsgemäßen Verfahren verwiesen.

Das erfindungsgemäße Brennstoffzellensystem kann dahingehend weitergebildet werden, dass die Vorrichtung zum Reduzieren der Flüssigkeitsmenge eine Pumpe und / oder einen Überlauf umfasst. Auf diese Weise kann die Vorrichtung zum Reduzieren der Flüssigkeitsmenge einfach realisiert werden, wobei insbesondere ein Überlauf, der sich an oder in einem sogenannten Zwischentank befinden kann, eine kostengünstige und zuverlässige Realisierung darstellt.

Das erfindungsgemäße Brennstoffzellensystem und die zuvor genannten Weiterbildungen können dahingehend weitergebildet werden, dass das Brennstoffzellensystem ein Direktmethanolbrennstoffzellensystem ist und weiterhin eine Einrichtung zum Ausgleichen von Änderungen des Methanolanteils im Anodenkreislauf umfasst. Zu den Vorteilen dieser Weiterbildung wird auf die entsprechende Darstellung im Zusammenhang mit dem erfindungsgemäßen Verfahren und dessen Weiterbildungen verwiesen.

Die verschiedenen Weiterbildungen lassen sich unabhängig voneinander einsetzen oder geeignet miteinander kombinieren.

Bevorzugte Ausführungsformen der Erfindung werden im Nachfolgenden unter Bezugnahme auf die Zeichnungen beschrieben.

### Kurzbeschreibung der Zeichnungen

- Fig. 1: zeigt ein Verfahrensfließbild für ein Brennstoffzellensystem nach dem Stand der Technik.
- Fig. 2: zeigt ein Verfahrensfließbild für ein erfindungsgemäßes Brennstoffzellensystem.
- Fig. 3: zeigt den Verlauf der gemessenen Brennstoffzellenspannung in einem Brennstoffzellensystem mit und ohne erfindungsgemäßer Selbstreinigung.

### Beschreibung der Ausführungsformen

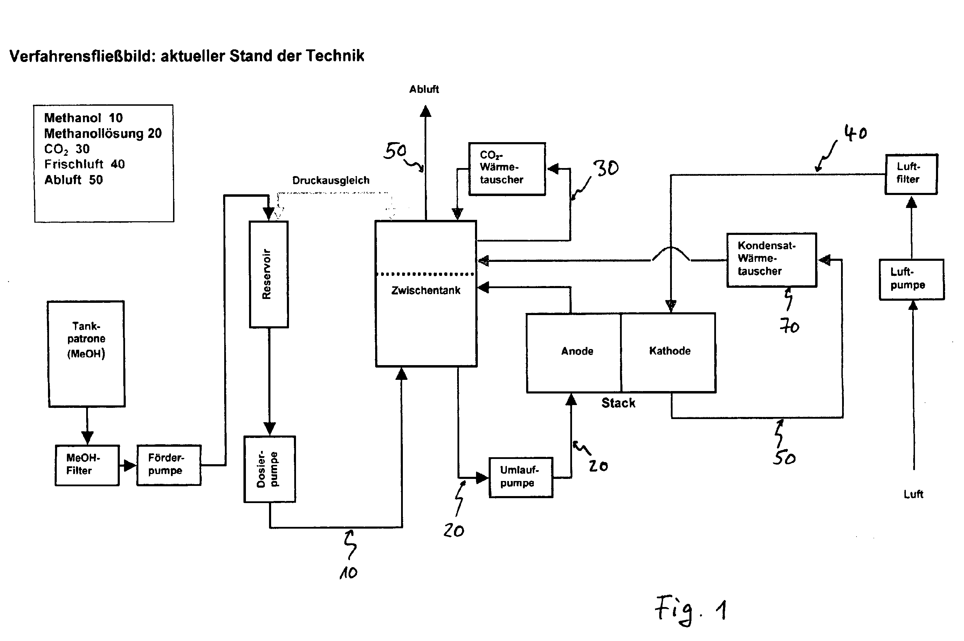

Figur 1 zeigt ein Verfahrensfließbild für ein Brennstoffzellensystem nach dem Stand der Technik. Das Brennstoffzellensystem umfasst ein Stack von Brennstoffzellen mit jeweils einer Anode und einer Kathode.

Der Anode der jeweiligen Brennstoffzelle wird eine Methanol-Wasser-Mischung 20 aus einem "Zwischentank" genannten Behälter in einem Kreislaufprozess zugeführt. Von der Anode abgehendes Fluid einschließlich von an der Anode entstandenem CO₂ wird wieder in den Zwischentank geleitet. Reines Methanol 10 wird beispielsweise mittels Pumpen aus einer Tankpatrone in den Zwischentank eingebracht.

Der Kathode der jeweiligen Brennstoffzelle wird Frischluft 40 zur Sauerstoffbereitstellung an der Kathode zugeführt.

Die Abluft 50 von der Kathode durchläuft einen Wärmetauscher 70, welcher mittels Luftkühlung die Abluft kühlt, wodurch Wasserdampf in der Abluft zum Teil kondensiert. Dieses kondensiertes Wasser wird im nachfolgenden Zwischentank zu einem gewissen Teil abgetrennt und dem Kreislauf mit der Methanollösung 20 beigemischt. Daher ist der Zwischentank ein Mittel zum Abtrennen von im Wärmetauscher auskondensiertem Wasser. Die Kühlung des Wärmetauschers 70 wird dabei so geregelt, dass die Abluft gerade soweit heruntergekühlt wird, dass nur soviel Wasser als Dampf in der Abluft das System verlässt, wie nötig ist, um die Flüssigkeitsmenge im Kreislauf aufrecht (konstant) zu erhalten.

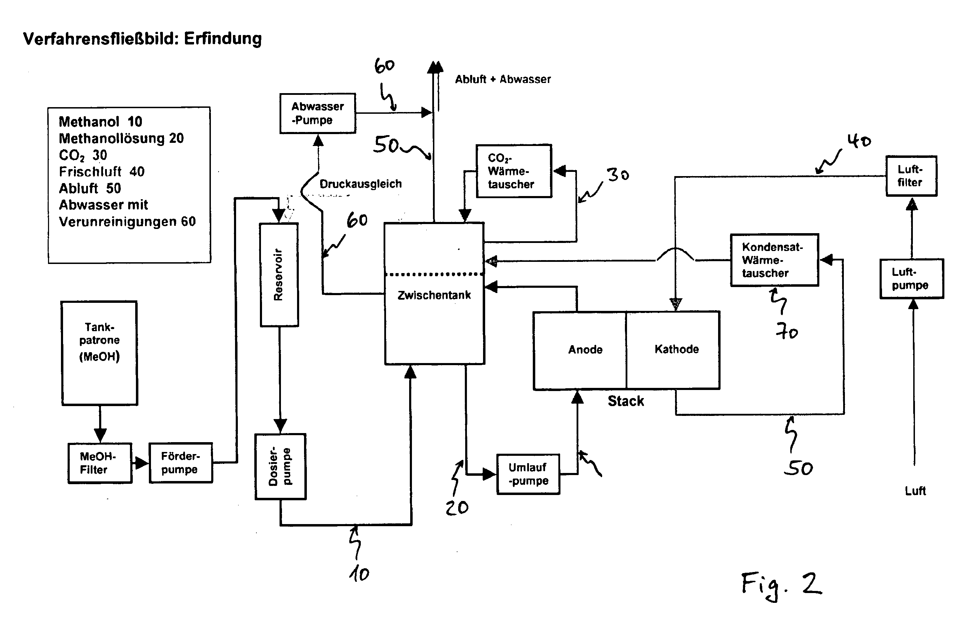

Figur 2 zeigt ein Verfahrensfließbild für eine Ausführungsform des erfindungsgemäßen Brennstoffzellensystems. Gegenüber dem Verfahrensfließbild nach dem Stand der Technik gemäß Figur 1 besteht der Unterschied darin, dass das Brennstoffzellensystem eine Abwasserpumpe aufweist, mit der Flüssigkeit 60 (Wasser - Methanol - Verunreinigungen) aus dem Anodenkreislauf aus dem Zwischentank abgepumpt und beispielsweise über den Abgasauslass aus dem System abgeführt wird.

Dieses Abpumpen kann z.B. mit einer im Wesentlichen konstanten Rate oder auch mit einer variablen Rate erfolgen, wobei im Falle einer variablen Rate insbesondere auch Pumppausen mit einer Rate von Null vorgesehen sein können, beispielsweise mit gleicher Dauer in periodischen Abständen. Die Kühlung wird (z.B. über die Drehgeschwindigkeit eines Lüfters) so eingestellt, dass der Flüssigkeitsverlust auf Grund des Abpumpens durch die Reduktion der Wasserdampfabgabe über die Abluft ausgeglichen wird. Die abgeführte Methanollösung (mit den darin enthaltenen Verunreinigungen) kann zum Beispiel in den Abluftschlauch eingebracht werden, um durch die warme Abluft gasförmig abgegeben zu werden und/oder um flüssig abzulaufen.

Nachfolgend wird die Erfindung nochmals im Zusammenhang mit einer weiteren speziellen Ausführungsformen dargestellt.

Eine gegenüber dem Stand der Technik zusätzlich eingeführte Vorrichtung im Brennstoffzellensystem entfernt einen Teil der Flüssigkeit aus dem verunreinigten Kreislauf, wodurch auch ein Teil der Verunreinigungen entfernt wird. Dieser flüssige Teil kann beispielsweise über den Abgasschlauch für die Abluft nach außen geführt werden. Die entfernte Flüssigkeitsmenge kann durch Reduzierung der Wasserdampfabgabe ausgeglichen werden. Die Vorrichtung zur Entfernung der Flüssigkeit kann durch einen Überlauf realisiert werden.

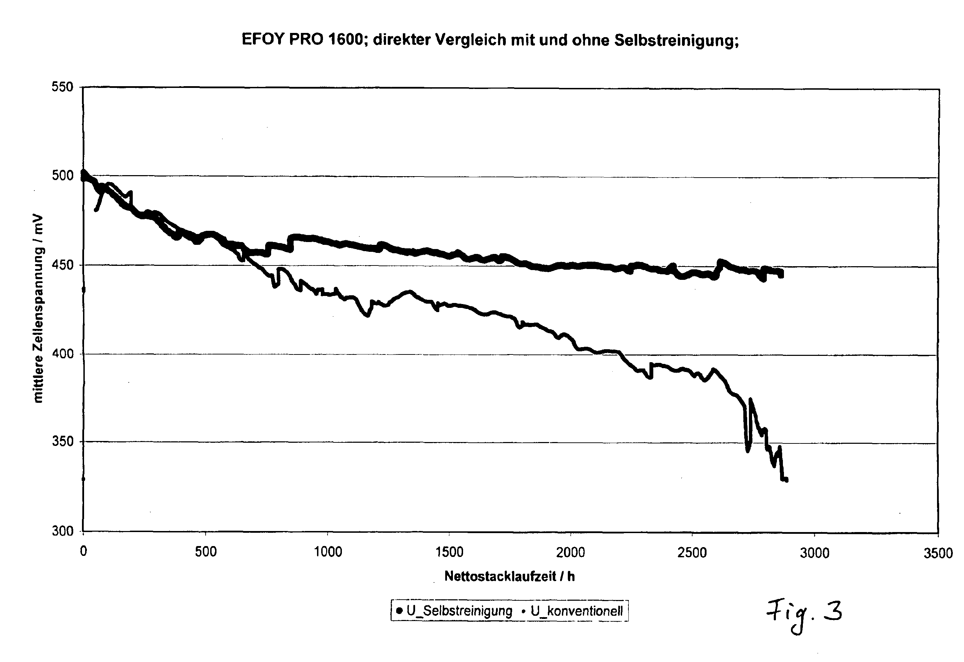

Figur 3 zeigt den Verlauf der gemessenen Brennstoffzellenspannung (in mV) in einem Direktmethanolbrennstoffzellensystem (EFOY PRO 1600, wie von der SFC Smart Fuel Cell AG angeboten) gegen die Betriebsdauer (net stack runtime in Stunden), einmal ohne (dünne Linie) und einmal mit (dicke Linie) erfindungsgemäßer Selbstreinigung im direkten Vergleich.

Dabei wurden im Falle mit Selbstreinigung beim Betrieb des Brennstoffzellensystem fortwährend etwa 10 ml Flüssigkeit aus dem Anodenkreislauf abgepumpt. Die Menge des mit der Abluft abgeführten Wasserdampfs wurde durch Regulieren der Kühlung des Wärmetauschers so eingestellt, dass sich ein Gleichgewicht zwischen dem Flüssigkeitsverlust des Kreislaufs sowohl durch Abführen der Wasser/Methanol Mischung (Methanollösung) aus dem Anodenkreislauf als auch durch Abführen von dampfförmigen Wasser über die Abluft auf der einem Seite und der Menge an überschüssig erzeugtem Prozesswasser auf der anderen Seite ergibt.

Es ist aus der Grafik ersichtlich, dass der Spannungsabfall unter Verwendung des erfindungsgemäßen Verfahrens langsamer erfolgt als beim herkömmlichen Betrieb. Dies ist insbesondere auf den effektiveren Verlauf der katalytischen Prozesse an der protonenleitenden Membran mit weniger Verunreinigungen zurückzuführen.

Über die gesamte Lebensdauer von ca. 5000 Betriebsstunden eines solchen Brennstoffzellensystems ergibt sich dabei eine insgesamt durch das erfindungsgemäße Verfahren abgeführte Flüssigkeitsmenge von 5000 h * 10 ml/h = 50 I. Diese Menge wird jedoch in Bezug auf den Wasseranteil (welcher den größten Anteil in der Flüssigkeit darstellt) durch die reduzierte Abdampfung von Prozesswasser ausgeglichen, so dass letztlich lediglich der Methanolanteil und der Anteil an Verunreinigungen in der abgeführten Flüssigkeit aus dem System entfernt werden.

Tests mit DMBZ-Systemen mit geringerer Nennleistung (als die Nennleistung von ca. 65 Watt der EFOY 1600, welche 1600 Wh/Tag liefert) haben ergeben, dass mit einer reduzierten Abpumprate und entsprechend reduzierter Kompensation des Flüssigkeitsverlusts durch Reduktion der Wasserdampfabgabe über die Abluft eine Verbesserung der Konstanz der Brennstoffzellenspannung erzielt wird. Aus praktischen Gründen (Entsorgung der abgeführten Flüssigkeit, Verlust an Methanol) ist die Abpumprate nach oben zu begrenzen. Aus den Tests ist zu schließen, dass die Abpumprate mit der Leistung des Brennstoffzellensystems ansteigt.

Im allgemeinen ist ein sinnvolles Verhältnis von Abpumprate zu Nennleistung des Brennstoffzellensystems durch 0,1 ml/(h*W Nennleistung) gegeben, also beispielsweise für 65 Watt Nennleistung eine Abpumprate von 6,5 ml/h. Eine sinnvolle obere Begrenzung des Verhältnisses von Abpumprate zu Nennleistung des Brennstoffzellensystems liegt bei etwa 1 ml/(h*W Nennleistung), also wiederum für 65 Watt Nennleistung bei einer maximalen Abpumprate von etwa 65 ml/h.

## Patentansprüche

1. Verfahren zum Abreichern von Verunreinigungen in einem Flüssigkeitskreislaufs eines Brennstoffzellensystems, wobei das Verfahren die folgenden Schritte umfasst:
(a) Reduzieren der Flüssigkeitsmenge im Flüssigkeitskreislauf durch Abführen eines Teils der Flüssigkeit; und
(b) Erhöhen der Flüssigkeitsmenge im Flüssigkeitskreislauf;
**dadurch gekennzeichnet, dass**
die Wassermenge im Flüssigkeitskreislauf des Brennstoffzellensystems durch Abführen von Wasserdampf aus dem Brennstoffzellensystem geregelt wird, und wobei das Erhöhen der Flüssigkeitsmenge im Flüssigkeitskreislauf ein Reduzieren der Wasserdampfabführung umfasst.

2. Verfahren nach Anspruch 1, wobei Schritt (a) vor Schritt (b) erfolgt und das Erhöhen der Flüssigkeitsmenge im Flüssigkeitskreislauf im Schritt (b) so lange erfolgt, bis die im Schritt (a) abgeführte Flüssigkeitsmenge wieder zugeführt ist.

3. Verfahren nach Anspruch 1, wobei Schritt (b) vor Schritt (a) erfolgt und das Reduzieren der Flüssigkeitsmenge im Schritt (a) so lange erfolgt, bis die im Schritt (b) erhöhte Flüssigkeitsmenge wieder abgeführt ist.

4. Verfahren nach Anspruch 1, wobei die Schritte (a) und (b) gleichzeitig oder teilweise gleichzeitig ausgeführt werden.

5. Verfahren nach einem der vorhergehenden Ansprüche, wobei der Flüssigkeitskreislauf einen Anodenkreislauf umfasst und das Reduzieren der Flüssigkeitsmenge im Flüssigkeitskreislauf ein Abführen eines Teils der Flüssigkeit aus dem Anodenkreislauf umfasst.

6. Verfahren nach einem der vorhergehenden Ansprüche, wobei das Erhöhen der Flüssigkeitsmenge im Flüssigkeitskreislauf ein Zuführen von Wasser in den Flüssigkeitskreislauf umfasst.

7. Verfahren nach einem der vorhergehenden Ansprüche, wobei das Brennstoffzellensystem ein Direktmethanolbrennstoffzellensystem ist und die Flüssigkeit eine Mischung aus Wasser und Methanol umfasst.

8. Verfahren nach Anspruch 7 in Kombination mit Anspruch 1 oder 6, wobei der Schritt (b) weiterhin ein Zuführen von Methanol umfasst, so dass das Mischungsverhältnis von Wasser und Methanol im Anodenkreislauf vor und nach Durchführung von Schritt (b) gleich ist.

9. Verfahren nach einem der vorhergehenden Ansprüche, wobei die Schritte (a) und (b) oder einer der Schritte (a) und (b) mehrfach, insbesondere periodisch wiederholt, ausgeführt werden/wird.

10. Verfahren nach einem der vorhergehenden Ansprüche, wobei die Schritte (a) und (b) derart aufeinander abgestimmt sind, dass die Flüssigkeitsmenge im Flüssigkeitskreislauf bei Durchführung des Verfahrens im Wesentlichen gleich ist.

11. Brennstoffzellensystem, welches zur Durchführung des Verfahrens nach einem der Ansprüche 1 bis 10 ausgebildet ist, umfassend:
eine Vorrichtung zum Reduzieren der Flüssigkeitsmenge in einem Flüssigkeitskreislauf des Brennstoffzellensystems durch Abführen eines Teils der Flüssigkeit;
**dadurch gekennzeichnet, dass**
das Brennstoffzellensystem weiterhin eine Einrichtung zum Regeln der Wassermenge im Flüssigkeitskreislauf des Brennstoffzellensystems durch Abführen von Wasserdampf aus dem Brennstoffzellensystem und zum Erhöhen der Flüssigkeitsmenge im Flüssigkeitskreislauf durch Reduzieren der Wasserdampfabführung umfasst;
wobei die Einrichtung zum Regeln der Wassermenge im Flüssigkeitskreislauf des Brennstoffzellensystems einen Wärmetauscher mit regulierbarer Kühlung umfasst.

12. Brennstoffzellensystem nach Anspruch 11, wobei die Vorrichtung zum Reduzieren der Flüssigkeitsmenge eine Pumpe und / oder einen Überlauf umfasst.

13. Brennstoffzellensystem nach einem der Ansprüche 11 bis 12, wobei das Brennstoffzellensystem ein Direktmethanolbrennstoffzellensystem ist und weiterhin eine Einrichtung zum Ausgleichen von Änderungen des Methanolanteils im Anodenkreislauf umfasst.

## Claims

1. Method for reducing the amount of impurities in a fluid circuit of a fuel cell system, the method comprising the following steps:
(a) reducing the amount of fluid in the fluid circuit by discharging some of the fluid; and
(b) increasing the amount of fluid in the fluid circuit;
**characterised in that** the amount of water in the fluid circuit of the fuel cell system is controlled by discharging water vapour from the fuel cell system, and wherein increasing the amount of fluid in the fluid circuit comprises reducing the water vapour discharge.

2. Method according to claim 1, wherein step (a) takes place before step (b) and the amount of fluid in the fluid circuit is increased in step (b) until the amount of fluid discharged in step (a) has been fed back in again.

3. Method according to claim 1, wherein step (b) takes place before step (a) and the amount of fluid is reduced in step (a) until the amount of fluid increased in step (b) is discharged again.

4. Method according to claim 1, wherein steps (a) and (b) are carried out simultaneously or simultaneously in part.

5. Method according to any of the preceding claims, wherein the fluid circuit comprises an anode circuit and reducing the amount of fluid in the fluid circuit comprises discharging some of the fluid from the anode circuit.

6. Method according to any of the preceding claims, wherein increasing the amount of fluid in the fluid circuit comprises feeding water into the fluid circuit.

7. Method according to any of the preceding claims, wherein the fuel cell system is a direct methanol fuel cell system and the fluid comprises a mixture of water and methanol.

8. Method according to claim 7 in combination with either claim 1 or claim 6, wherein step (b) further comprises feeding methanol such that the mixing ratio of water and methanol in the anode circuit is the same prior to and following the implementation of step (b).

9. Method according to any of the preceding claims, wherein steps (a) and (b) or one of steps (a) and (b) is/are carried out multiple times, in particular repeated periodically.

10. Method according to any of the preceding claims, wherein steps (a) and (b) are tailored to each other in such a way that the amount of fluid in the fluid circuit is substantially the same during implementation of the method.

11. Fuel cell system which is designed to implement the method according to any of claims 1 to 10, comprising:
a device for reducing the amount of fluid in a fluid circuit of the fuel cell system by discharging some of the fluid;
**characterised in that** the fuel cell system further comprises an apparatus for controlling the amount of water in the fluid circuit of the fuel cell system by discharging water vapour from the fuel cell system and for increasing the amount of fluid in the fluid circuit by reducing the water vapour discharge;
wherein the apparatus for controlling the amount of water in the fluid circuit of the fuel cell system comprises a heat exchanger having an adjustable cooling system.

12. Fuel cell system according to claim 11, wherein the device for reducing the amount of fluid comprises a pump and/or an overflow.

13. Fuel cell system according to any of claims 11 to 12, wherein the fuel cell system is a direct methanol fuel cell system and further comprises an apparatus for compensating for changes in the proportion of methanol in the anode circuit.

## Revendications

1. Procédé d'appauvrissement d'impuretés dans un circuit de liquide d'un système de pile à combustible, dans lequel le procédé comporte les étapes suivantes :
(a) réduction de la quantité de liquide dans le circuit de liquide par élimination d'une partie du liquide ; et
(b) augmentation de la quantité de liquide dans le circuit de liquide ;
**caractérisé en ce que**
la quantité d'eau dans le circuit de liquide du système de pile à combustible est régulée par élimination de vapeur d'eau du système de pile à combustible, et dans lequel l'augmentation de la quantité de liquide dans le circuit de liquide comporte une réduction de l'élimination de vapeur d'eau.

2. Procédé selon la revendication 1, dans lequel l'étape (a) a lieu avant l'étape (b), et l'augmentation de la quantité de liquide dans le circuit de liquide à l'étape (b) continue jusqu'à ce que la quantité de liquide éliminée à l'étape (a) soit réintroduite.

3. Procédé selon la revendication 1, dans lequel l'étape (b) a lieu avant l'étape (a), et la réduction de la quantité de liquide à l'étape (a) continue jusqu'à ce que la quantité de liquide augmentée à l'étape (b) soit de nouveau éliminée.

4. Procédé selon la revendication 1, dans lequel les étapes (a) et (b) sont mises en oeuvre de manière simultanée ou partiellement simultanée.

5. Procédé selon l'une des revendications précédentes, dans lequel le circuit de liquide comporte un circuit anodique et la réduction de la quantité de liquide dans le circuit de liquide comporte l'élimination d'une partie du liquide du circuit anodique.

6. Procédé selon l'une des revendications précédentes, dans lequel l'augmentation de la quantité de liquide dans le circuit de liquide comporte un apport d'eau dans le circuit de liquide.

7. Procédé selon l'une des revendications précédentes, dans lequel le système de pile à combustible est un système de pile à combustible à méthanol direct et le liquide comporte un mélange d'eau et de méthanol.

8. Procédé selon la revendication 7 combinée à la revendication 1 ou 6, dans lequel l'étape (b) comporte en outre un apport de méthanol de telle sorte que le rapport de mélange d'eau et de méthanol dans le circuit anodique est égal avant et après la mise en oeuvre de l'étape (b).

9. Procédé selon l'une des revendications précédentes, dans lequel les étapes (a) et (b) ou l'une des étapes (a) et (b) sont mises en oeuvre plusieurs fois, en particulier de manière périodiquement répétée.

10. Procédé selon l'une des revendications précédentes, dans lequel les étapes (a) et (b) sont
coordonnées de telle sorte que la quantité de liquide dans le circuit de liquide reste essentiellement égale lors de la mise en oeuvre du procédé.

11. Système de pile à combustible constitué pour la mise en oeuvre du procédé selon l'une des revendications 1 à 10, comprenant :
un dispositif pour réduire la quantité de liquide dans un circuit de liquide du système de pile à combustible par élimination d'une partie du liquide ;
**caractérisé en ce que**
le système de pile à combustible comporte en outre un dispositif pour réguler la quantité d'eau dans le circuit de liquide du système de pile à combustible par élimination de vapeur d'eau du système de pile à combustible, et pour augmenter la quantité de liquide dans le circuit de liquide par réduction de l'élimination de vapeur d'eau ;
dans lequel le dispositif de régulation de la quantité d'eau dans le circuit de liquide du système de pile à combustible comporte un échangeur de chaleur à refroidissement réglable.

12. Système de pile à combustible selon la revendication 11, dans lequel le dispositif de réduction de la quantité de liquide comporte une pompe et/ou un trop-plein.

13. Système de pile à combustible selon l'une des revendications 11 et 12, dans lequel le système de pile à combustible est un système de pile à combustible à méthanol direct et comporte en outre un dispositif de compensation des variations de la fraction de méthanol dans le circuit anodique.
